Europäisches Patentamt

(19) European Patent Office

Office européen des brevets

(11) Publication number: **0 202 855**
**B1**

# (12) EUROPEAN PATENT SPECIFICATION

(45) Date of publication of the patent specification:
16.05.90

(51) Int. Cl.⁵: **B60R 1/06**

(21) Application number: **86303658.8**

(22) Date of filing: **14.05.86**

(54) Exterior rearview mirror.

(30) Priority: **24.05.85 GB 8513223**

(43) Date of publication of application:
**26.11.86 Bulletin 86/48**

(45) Publication of the grant of the patent:
**16.05.90 Bulletin 90/20**

(84) Designated Contracting States:
**DE FR GB IT**

(56) References cited:
**DE-A- 2 431 735**
**FR-A- 2 131 482**

(73) Proprietor: **BRITAX WINGARD LIMITED, Kingsham Road, Chichester, West Sussex P019 2AQ(GB)**

(72) Inventor: **Whitehead, Peter John, 35 Southbourne Avenue, Emsworth Hants(GB)**

(74) Representative: **Hollinghurst, Antony, Britax Limited Patent Department, Chichester West Sussex PO19 2AQ(GB)**

ACTORUM AG

## Description

This invention relates to an exterior rearview mirror for a motor vehicle of the type having a housing mounted on a base member by means of a ball-and-socket joint comprising a socket formed in the base member and a convex member attached to the housing, wherein the convex member is formed in a plurality of segments each of which is movable radially relative to the axis of a hole extending diametrically through the convex member, a tapering member projects through the hole. A mirror of this type is disclosed in GB-A 1 387 663.

DE-A 2 431 735 discloses an exterior rearview mirror for a motor vehicle of the type where the orientation of the mirror housing relative to the vehicle can be adjusted from inside the vehicle, having a ball-and-socket joint of which the two parts are resiliently biased towards each other and release means, including a lever accessible from inside the vehicle, are operative to relieve the biasing force.

According to the invention, in an exterior rearview mirror of the type described above, resilient means biases the tapering member relative to the convex member so as to urge the segments thereof outwardly against the socket, and release means are operable from inside the vehicle to displace the tapering member against the action of the resilient means.

Operation of the release means thus reduces the friction in the ball-and-socket joint, enabling the orientation of the housing relative to the base member to be adjusted with relatively little effort.

In one form of the invention, the tapering member is fast with the housing.

Preferably the manual release means comprises a first lever fast with one of the segments of the spherical member and extending into the interior of the vehicle with a lateral projection on its free end, and a second arm fast with the tapering member and extending into the interior of the vehicle parallel to and in abutment with the first arm and having a second projection on its free end extending parallel to the first projection so that squeezing the two projections together displaces the tapering member against the action of the resilient means.

An embodiment of the invention will now be described, by way of example, with reference to the accompanying drawings, in which:

Figure 1 is an elevational view of an exterior mirror in accordance with the invention, showing only part of the mirror housing and taken from the side from which the mirror is viewed;

Figure 2 is a plan view of the mirror shown in Figure 1, partially broken away to show the ball-and-socket joint in horizontal section; and

Figure 3 is a cross-sectional view taken on the line 3–3 in Figure 2.

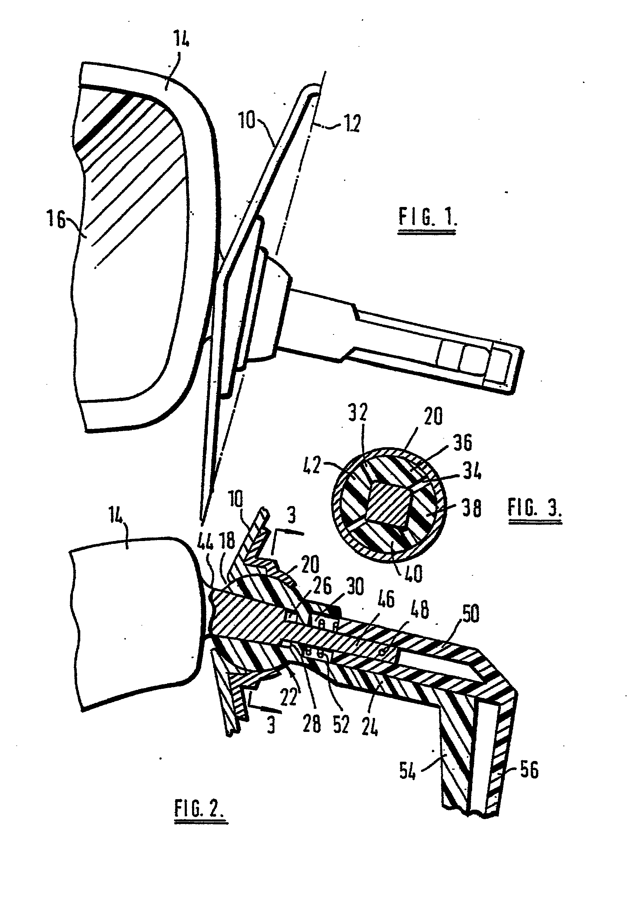

Referring to the drawings, an exterior rearview mirror comprises a base member 10 adapted to be secured to a motor vehicle body panel, the outer surface of which is represented by the chain-dotted line 12, and a housing 14 in which a mirror glass 16 is mounted. As can best be seen from Figure 2, the base member 10 has an opening 18, the inner periphery of which forms one half of a part-spherical socket, the other half of which is formed by a clamping ring 20 secured to the base member 10.

The clamping ring 20 serves to retain a ball 22 formed on one end of a lever 24 which is formed from plastics material. The ball 22 contains a hole 26 of square cross-section which opens onto the side of the ball facing the mirror housing 14 and extends parallel to the lever 24 and tapers inwardly to an end wall 28. A smaller hole, also of square cross-section, extends through the end wall 28 into a socket 30 formed in the lever 24. As can best be seen from Figure 3, the ball 22 is divided into four segments 36, 38, 40 and 42 by two diametrically oriented slots 32 and 34, each of which extends from the side of the ball 22 facing the housing 14 as far as the end 28.

A tapering member 44, also of square cross-section, has its broader end secured to the end of the housing 14 and its narrower end extending into the hole 26 so as to engage with the side walls thereof. A bar 46, of uniform square cross-section, is formed integrally with the tapering member 44 and projects through the hole in the end wall 28 and is secured, by a transverse pin 48, to a second plastics lever 50 which slidably received in the socket 30. A compression spring 52, located in the socket 30, engages with the second lever 50 so as to urge the tapering member 44 into the tapering hole 26, thus forcing the segments 36, 38, 40 and 42 of the ball 22 into tight frictional engagement with the part-spherical socket, thereby holding the mirror housing 14 in a chosen orientation relative to the base member 10.

Each of the levers 24 and 50 has a respective hand-grip projection 54, 56 extending laterally from its free end. When the two projections 54 and 56 are squeezed together, the spring 52 is compressed, relieving the thrust exerted on the segments 36, 38, 40 and 42 and thus reducing the frictional forces between the ball 22 and the part-spherical socket. The two levers 24 and 50 can then be moved simultaneously to set the housing 14 in a new orientation relative to the base member 10. When the hand-grip projections 54 and 56 are allowed to move apart again, the housing is clamped in its new orientation.

## Claims

1. An exterior rearview mirror for a motor vehicle having a housing (14) mounted on a base member (10) by means of a ball-and-socket (18, 20) joint comprising a socket (18, 20) formed in the base member (10) and a convex member (22) attached to the housing (14), the convex member (22) being formed in a plurality of segments (36, 38, 40, 42) each of which is movable radially relative to the axis of a hole (26) extending diametrically through the convex member (22), a tapering member (44) projects through the hole (26), characterised in that resilient means (52) biases the tapering member (44) relative to the convex member (22) so as to urge the segments (36, 38, 40, 42) thereof outwardly against the socket (18, 20), and release means (54, 56) are operable from inside the vehicle to displace the tapering member (44) against the action of the resilient means (52).

2. An exterior mirror according to claim 1, wherein the tapering member (44) is fast with the housing (14).

3. An exterior mirror according to claim 1 or 2, wherein the manual release means (54, 56) comprises a first lever fast with one of the segments (36, 38, 40, 42) of the spherical member and extending into the interior of the vehicle with a lateral projection on its free end, and a second arm fast with the tapering member (44) and extending into the interior of the vehicle parallel to and in abutment with the first arm and having a second projection on its free end extending parallel to the first projection so that squeezing the two projections together displaces the tapering member (44) against the action of the resilient means (52).

**Patentansprüche**

1. Außenrückspiegel für ein Kraftfahrzeug, umfassend ein Gehäuse (14), das an einem Träger (10) mittels eines Kugelscharniers (18, 20) montiert ist, welches eine in dem Träger (10) gebildete Fassung (18, 20) und ein an dem Gehäuse (14) befestigtes konvexes Element (22) aufweist, wobei das konvexe Element (22) in Form einer Mehrzahl von Segmenten (36, 38, 40, 42) gebildet ist, von denen jedes bezüglich der Achse eines sich diametral durch das konvexe Element (22) erstreckenden Lochs (26) radial beweglich ist, und ein durch das Loch (26) vorstehendes, sich verjüngendes Element (40),
dadurch gekennzeichnet,
daß elastische Mittel (52) das sich verjüngende Element (44) bezüglich des konvexen Elements (22) vorspannen, um dessen Segmente (36, 38, 40, 42) nach außen gegen die Fassung (18, 20) zu drängen, und eine Löseeinrichtung (54, 56) vom Fahrzeuginneren her betätigbar ist, um das sich verjüngende Element (44) gegen die Wirkung der elastischen Mittel (52) zu versetzen.

2. Außenrückspiegel nach Anspruch 1, bei das sich verjüngende Element (44) mit dem Gehäuse (14) fest ist.

3. Außenrückspiegel nach Anspruch 1 oder 2, bei dem die Hand-Löseeinrichtung (54, 56) einen mit einem der Segmente (36, 38, 40, 42) des kugeligen Elements vereinigten und sich mit einem seitlichen Vorsprung an seinem freien Ende in das Fahrzeuginnere erstreckenden ersten Hebel und einen mit dem sich verjüngenden Element (44) vereinigten zweiten Arm aufweist, der sich parallel zu und in Anlage mit dem ersten Arm in das Fahrzeuginnere erstreckt und an seinem freien Ende einen zweiten Vorsprung besitzt, der sich parallel zu dem ersten Vorsprung erstreckt, so daß ein Zusammenpressen der zwei Vorsprünge das sich verjüngende Element (44) gegen die Wirkung der elastischen Mittel (52) versetzt.

**Revendications**

1. Rétroviseur extérieur pour véhicule automobile comportant un boîtier (14) monté sur un élément de base (10) au moyen d'un joint à bille (18, 20) constitué d'une cavité (18, 20) ménagée dans l'élément de base (10) et un élément convexe (22) fixé au boîtier (14), l'élément convexe (22) étant constitué d'une pluralité de segments (36, 38, 40, 42) dont chacun est mobile radialement par rapport à l'axe d'un trou (26) s'étendant diamétralement à travers l'élément convexe (22), un élément cunéiforme (44) fait saillie par le trou (26), caractérisé en ce qu'un moyen élastique (52) sollicite l'élément cunéiforme (44) par rapport à l'élément convexe (22) de façon à solliciter les segments (36, 38, 40, 42) de celui-ci vers l'extérieur contre la cavité (18, 20), et un dispositif de desserrage (54, 56) est susceptible d'être actionné de l'intérieur du véhicule pour déplacer l'élément cunéiforme (44) à l'encontre de l'action du moyen élastique (52).

2. Un rétroviseur extérieur selon la revendication 1, dans lequel l'élément cunéiforme (44) est solidarisé au boîtier (14).

3. Un rétroviseur extérieur selon la revendication 1 ou 2, dans lequel le dispositif manuel de desserrage (54, 56) comprend un premier levier solidaire de l'un des segments (36, 38, 40, 42) de l'élément sphérique et se prolongeant à l'intérieur du véhicule par une saillie latérale à son extrémité libre, et un second bras solidaire de l'élément cunéiforme (44) et se prolongeant à l'intérieur du véhicule parallèlement à et en aboutement contre le premier bras et présentant une seconde saillie à son extrémité libre s'étendant parallèlement à la première saillie de sorte que le serrage des deux saillies l'une contre l'autre déplace l'élément cunéiforme (44) à l'encontre de l'action du moyen élastique (52).

FIG. 1.

FIG. 2.

FIG. 3.